# EUROPÄISCHE PATENTSCHRIFT

(11) **EP 3 012 945 B1**
(45) Veröffentlichungstag und Bekanntmachung des Hinweises auf die Patenterteilung: **15.11.2017**
(21) Anmeldenummer: 15183261.5
(22) Anmeldetag: 01.09.2015
(51) Int. Cl.: H02K 5/20, H02K 1/20, H02K 21/16, H02K 1/27

(54) **ELEKTRISCHE MASCHINE MIT EINEM GEHÄUSE**
ELECTRIC MACHINE WITH A HOUSING
MACHINE ELECTRIQUE DOTEE D'UN CARTER

(30) Priorität: 24.10.2014 DE 102014221653
(43) Veröffentlichungstag der Anmeldung: 27.04.2016
(73) Patentinhaber: ROBERT BOSCH GMBH, 70442 Stuttgart (DE)
(72) Erfinder: Reiter, Jochen, 71336 Waiblingen (DE); Schwiderski, Michael, 71679 Asperg (DE); Kuehbacher, Daniel, 70569 Stuttgart (DE); Heuser, Patrick, 70372 Stuttgart (DE)

(56) Entgegenhaltungen:
- DE-A1- 1 488 657
- DE-A1-102012 017 293
- US-A1- 2007 210 669

## Beschreibung

### Technisches Gebiet

Die Erfindung betrifft elektrische Maschinen, insbesondere elektronisch kommutierte elektrische Maschinen. Weiterhin betrifft die vorliegende Erfindung rotatorische elektrische Maschinen mit einem Innenläufer, bei denen eine Statoranordnung in einem Gehäuse angeordnet ist.

### Stand der Technik

Elektrische Maschinen weisen üblicherweise eine Statoranordnung und eine Läuferanordnung auf, die in einem Gehäuse angeordnet sind. Das Gehäuse dient dazu, die Statoranordnung und die Läuferanordnung gegen Verunreinigungen und Feuchtigkeit zu schützen, die Statoranordnung zu halten und die elektrischen Komponenten der elektrischen Maschine abzuschirmen.

Bislang ist das Gehäuse aus einem elektrisch leitfähigen, jedoch magnetisch nicht leitenden Material, wie zum Beispiel Aluminium, ausgebildet. Dies hat den Nachteil, dass es elektromagnetisch nicht abschirmend wirkt, so dass beim Betrieb der elektrischen Maschine von dieser Störungen ausgehen können. Die Ausführung des Gehäuses aus Aluminium kann weiterhin zu relativ großen Wandstärken aufgrund von Anforderungen beim Herstellungsprozess und aufgrund der geringen Materialfestigkeit führen.

Das Gehäuse aus einem magnetisch leitfähigen Material, wie zum Beispiel Eisenblech bzw. Stahl, herzustellen, würde zwar die elektromagnetische Verträglichkeit verbessern, dies führt aber dazu, dass in dem Gehäuse wegen des häufig unregelmäßigen Kontakts zur Statoranordnung magnetische Verbindungen zwischen unterschiedlichen Abschnitten der dem Gehäuse zugewandten Außenfläche der Statoranordnung hergestellt werden, was zu Verlusten durch Wirbelströme und Ummagnetisierungen führt. Auch bei vollflächigem Kontakt zwischen der Statoranordnung und dem magnetisch leitfähigen Gehäuse können Verluste durch Wirbelströme entstehen.

US 2007/210669 A1 offenbart eine elektrische Maschine gemäß dem Oberbegriff des Anspruchs 1. Es ist Aufgabe der vorliegenden Erfindung, eine elektrische Maschine zur Verfügung zu stellen, die ein Gehäuse aus einem magnetisch leitenden Material aufweist und geringe Wirbelstrom- und Ummagnetisierungsverluste hat.

### Offenbarung der Erfindung

Diese Aufgabe wird durch die elektrische Maschine gemäß Anspruch 1 gelöst. Weitere Ausgestaltungen sind in den abhängigen Ansprüchen angegeben.

Gemäß einem ersten Aspekt ist eine elektrische Maschine vorgesehen, umfassend:
- eine insbesondere kreiszylindrische Statoranordnung
- ein Gehäuse aus einem magnetisch leitfähigen Material, das die Statoranordnung umgibt, so dass ein Zwischenraum zwischen dem Gehäuse und der Statoranordnung ausgebildet ist,
- Halteelemente, die zwischen der Statoranordnung und dem Gehäuse angeordnet sind,
wobei die Halteelemente aus einem magnetisch leitfähigen Material ausgebildet sind und in Umfangsrichtung mit einem Abstand zueinander angeordnet sind, der einer vollen elektrische Periode der Statoranordnung oder einem ganzzahligen Vielfachen davon entspricht.

Eine Idee der obigen elektrischen Maschine besteht darin, das Gehäuse aus einem magnetisch leitfähigen Material, insbesondere Stahl oder Eisenblech, auszuführen und die Statoranordnung an dem Gehäuse über gleichförmig beabstandete definierte ebenfalls magnetisch leitfähige Halteelemente an Abstützstellen zu halten. Die Abstützstellen weisen einen Abstand in Umfangsrichtung auf, der einer vollen elektrischen Periode oder einem Vielfachen davon entspricht. D.h. das durch die Statorwicklung an den Abstützstellen bewirkte Magnetfeld wird durch jeweils die gleiche Phase hervorgerufen. Dadurch können das Gehäuse und die Abstützung an den Abstützstellen aus gleichem, magnetisch leitfähigem Material, insbesondere einstückig ausgebildet sein. Weiterhin wird durch den Abstand der Abstützstellen gewährleistet, dass die durch die Abstützung zwischen der Statoranordnung und dem Gehäuse fließenden magnetischen Flüsse gleichgerichtet sind und die gleiche Stärke aufweisen und somit keinen magnetischen Fluss im Gehäuse insbesondere in Umfangsrichtung verursachen.

Dadurch können die magnetischen Verluste im Gehäuse reduziert bzw. eliminiert werden. Bei Verwendung eines Materials als Gehäusewerkstoff, das dem Material des Statorkörpers der Statoranordnung entspricht, können aufgrund gleicher Wärmeausdehnungskoeffizienten mechanische Spannungen vermieden werden. Zudem kann das Gehäuse insbesondere, wenn dieses aus Stahl oder Eisenblech ausgebildet ist, mit einer geringeren Wandstärke ausgebildet werden, so dass der gesamte Bauraum für die elektrische Maschine reduziert ist.

Weiterhin kann mindestens eines der Halteelemente, insbesondere alle Halteelemente einstückig mit dem Gehäuse ausgebildet sein.

Insbesondere kann zwischen mindestens einem der Halteelemente, insbesondere allen Halteelementen, und der Statoranordnung ein Isolationsstück zur elektrischen Isolierung zwischen dem Gehäuse und der Statoranordnung vorgesehen sein.

Alternativ oder zusätzlich kann mindestens eines der Halteelemente, insbesondere alle Halteelemente, einstückig mit der Statoranordnung ausgebildet sein. Insbesondre kann zwischen mindestens einem der Halteelemente, insbesondere allen Halteelementen, und dem Gehäuse ein Isolationsstück zur elektrischen Isolierung zwischen dem Gehäuse und der Statoranordnung vorgesehen sein.

Gemäß der Erfindung kann der Abstand in Umfangsrichtung einem Winkel, der 360° geteilt durch eine Polpaarzahl der elektrischen Maschine entspricht, oder einem ganzzahligen Vielfachen davon entsprechen.

Es kann vorgesehen sein, dass die Zwischenräume zwischen dem Gehäuse und der Statoranordnung mit einem vorzugsweise elektrisch nichtleitenden Kühlmedium, wie z.B. Öl, gefüllt sind. Dadurch kann der Abstand zwischen der Statoranordnung und dem Gehäuse für Maßnahmen zur Kühlung der elektrischen Maschine verwendet werden. Insbesondere kann auf das Vorsehen von Kühlmediumkanälen in dem Gehäuse oder in der Statoranordnung verzichtet werden, wodurch der Herstellungsaufwand reduziert wird.

Weiterhin können in den Zwischenräumen zwischen dem Gehäuse und der Statoranordnung Kühlelemente angeordnet sein, wobei die Kühlelemente als sich in einer axialen Richtung verlaufende Kühlrippen ausgeführt sind, die einen eckigen, insbesondere dreieckigen, oder kreissegmentförmigen Querschnitt aufweisen.

Alternativ oder zusätzlich können in den Zwischenräumen zwischen dem Gehäuse und der Statoranordnung Kühlelemente angeordnet sein, wobei die Kühlelemente als Pin-Fins ausgeführt sind. Dadurch können Verwirbelungen in einem durchgeleiteten Kühlmedium bewirkt werden, wodurch eine Verbesserung der Wärmeabführung erreicht wird.

Die Statoranordnung kann mit in Umfangsrichtung in den Zwischenraum hineinragenden Kühlflächen ausgebildet sein, wobei die Kühlflächen voneinander beabstandet sind und bezüglich einer axialen Richtung ineinandergreifend ausgebildet sind.

Gemäß einer Ausführungsform können die Statoranordnung und das Gehäuse aus gleichen Materialien ausgebildet sein.

Gemäß einem weiteren Aspekt ist eine Verwendung einer elektrischen Maschine vorgesehen, wobei durch die Zwischenräume in axialer Richtung ein Kühlmedium geleitet wird.

### Kurzbeschreibung der Zeichnungen

Ausführungsformen werden nachfolgend anhand der beigefügten Zeichnungen näher erläutert. Es zeigen:
- Figur 1a und 1b: einen Ausschnitt aus einer elektrischen Maschine mit einer an einem Gehäuse gehaltenen Statoranordnung;
- Figur 2: eine Darstellung eines Ausschnitts durch eine elektrische Maschine mit Zwischengehäuse und Statoranordnung vorgesehen;
- Figur 3: eine Ausschnittsdarstellung durch eine elektrische Maschine, bei der die zum Gehäuse gerichtete Außenfläche der Statoranordnung strukturiert ist;
- Figur 4: eine Draufsichtsdarstellung auf eine zum Gehäuse gerichtete Außenseite der Statoranordnung der Figur 3; und
- Figur 5: eine Ausschnittsdarstellung durch eine elektrische Maschine, bei der die zum Gehäuse gerichtete Außenfläche der Statoranordnung strukturiert ist.

### Beschreibung von Ausführungsformen

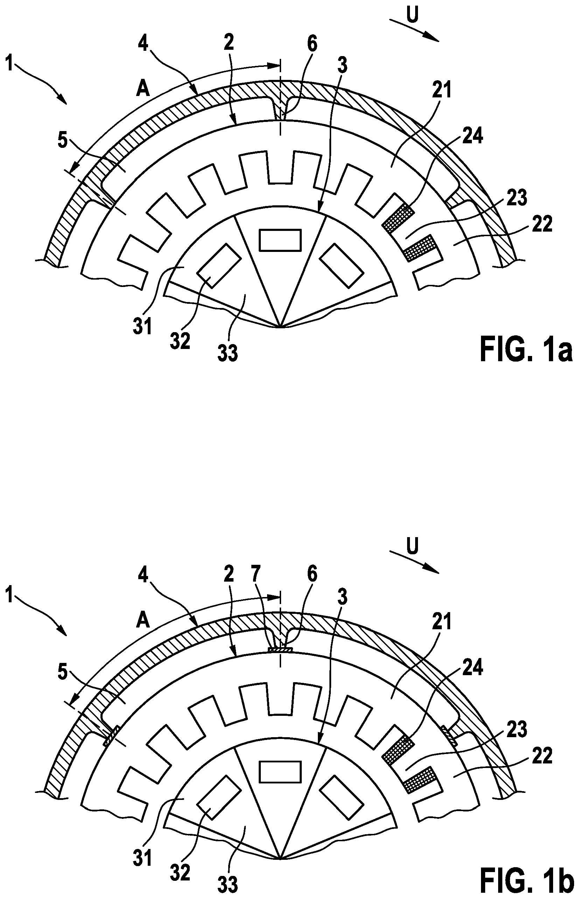

In den Figuren 1a, 1b, 2, 3 und 5 sind jeweils ein Ausschnitt aus einer Querschnittsdarstellung durch eine elektrische Maschine 1 gezeigt. Die elektrische Maschine 1 umfasst eine Statoranordnung 2, die im Wesentlichen kreiszylinderförmig ausgebildet ist und einen Statorkörper 21 aus einem weichmagnetischen, d.h. magnetisch leitfähigen Material aufweist. Das Material des Statorkörpers 21 kann beispielsweise Stahl oder Eisenblech sein und insbesondere in Form von in axialer Richtung gestapelten Blechlamellen ausgebildet sein.

Der Statorkörper 21 weist einen kreiszylinderförmigen Rückschlussbereich 22 und davon radial nach innen abstehend Statorzähne 23 auf, die gleichförmig zueinander in Umfangsrichtung beabstandet sind. Die Statorzähne 23 können jeweils von einer oder mehreren Statorspulen 24 einer Statorwicklung umgeben sein, die jeweils einen oder mehrere Statorzähne 23 umschließt. Dies ist in den Figuren für einen der Statorzähne 23 beispielhaft dargestellt. Die abstehenden Enden der Statorzähne 23 definieren eine kreiszylinderförmige Innenausnehmung.

In der Innenausnehmung ist eine drehbeweglich gelagerte Läuferanordnung 3 (Rotor) vorgesehen. Die Läuferanordnung 3 weist Läuferpole 31 auf, die bezüglich der Umfangsrichtung U wechselweise magnetisiert sind. Zur Magnetisierung der Läuferanordnung 3 können Permanentmagnete 32 auf oder in einem Läuferkörper 33 der Läuferanordnung 3 vorgesehen sein.

Zum Schutz der elektrischen Maschine 1 ist die Statoranordnung 2 im wesentlichen konzentrisch von einem Gehäuse 4 umgeben, das aus einem weichmagnetischen und elektrisch leitfähigen Material, wie beispielsweise Eisen oder Stahl, zum Beispiel in Form eines tiefgezogenen Bleches, ausgebildet sein kann. Die Verwendung von Materialien, die weichmagnetisch und elektrisch leitfähig sind, für das Gehäuse 4 hat den Vorteil einer besseren Verarbeitbarkeit bzw. Formbarkeit und einer einfacheren Herstellung.

Zwischen dem Gehäuse 4 und der Statoranordnung 2 ist ein Zwischenraum 5 vorgesehen, um eine magnetische Trennung zwischen der Statoranordnung 2 und dem Gehäuse 4 zu gewährleisten. Der Zwischenraum 5 wird mit Hilfe von Halteelementen 6 bewirkt, durch die die Statoranordnung 2 von dem Gehäuse 4 beabstandet im Inneren des zylinderförmigen Gehäuses 4 gehalten bzw. abgestützt wird. Die Halteelemente 6 können einstückig mit dem Gehäuse 4 oder einstückig mit der Statoranordnung 2 ausgebildet sein und jeweils an der Statoranordnung 2 bzw. dem Gehäuse 4 anliegen. Alternativ können die Halteelemente 6 auch separat ausgebildet sein und jeweils an der Statoranordnung 2 und an dem Gehäuse 4 anliegen.

Die Halteelemente 6 sind in Umfangsrichtung beabstandet angeordnet, wobei der Zwischenraum 5 in Umfangsrichtung einem Winkel entsprechen kann, der 360° multipliziert mit der Anzahl der Phasen und dividiert durch die Anzahl der Statorzähne oder 360° geteilt durch die Polpaarzahl des Läufers 3 entspricht. Allgemein soll die Länge des Zwischenraums 5 der Halteelemente 6 in Umfangsrichtung der elektrischen Periode der elektrischen Maschine 1 entsprechen. Dadurch weisen die magnetischen Flüsse durch die Halteelemente 6 radial nach außen immer die gleiche Höhe auf. Es wird so verhindert, dass magnetische Flüsse im Gehäuse 4 in Umfangsrichtung entstehen und magnetische Kurzschlüsse durch das Gehäuse 4 zwischen den Halteelementen 6 verlaufen.

Insgesamt führt dieser Aufbau dazu, dass die elektromagnetische Verträglichkeit durch die abschirmende Wirkung des magnetisch (und elektrisch) leitfähigen Gehäuses 4 verbessert wird. Gleichzeitig wird der Nachteil, dass in einem magnetisch leitfähigen Gehäuse 4 durch Induktion Verluste entstehen, dadurch vermieden, dass die Halteelemente 6 an den Abstützstellen wegen ihres Abstands (in Umfangsrichtung) zueinander von einer vollen elektrischen Periode keine elektromagnetischen Potenzialunterschiede aufweisen.

Insbesondere für das vorliegende Ausführungsbeispiel wurde festgestellt, dass die Länge des Zwischenraums 5 zwischen den Halteelementen 6 bzw. der Abstand von zwei benachbarten Halteelementen 6 in Umfangsrichtung von einer vollen elektrischen Periode der elektrischen Maschine 1 eine Toleranz um einen Statorzahn aufweisen kann, ohne dass ein signifikanter magnetischer Fluss in dem Gehäuse 4 in Umfangsrichtung eingekoppelt wird.

Es kann zusätzlich vorgesehen sein, dass an jedem der Halteelemente 6 zwischen Gehäuse 4 und der Statoranordnung 2 eine elektrische Isolation, zum Beispiel durch Einlegen eines Isolationsstücks 7, wie es in Figur 1b gezeigt ist, eingebracht wird. Das Isolationsstück 7 kann sich zwischen dem jeweiligen Halteelement 6 und der Statoranordnung 2 oder zwischen dem jeweiligen Halteelement 6 und dem Gehäuse 4 befinden. Dies hat den Vorteil, dass eine Koppelkapazität zwischen dem Gehäuse 4 und der Statoranordnung 2 reduziert wird und dadurch die elektromagnetische Verträglichkeit verbessert wird.

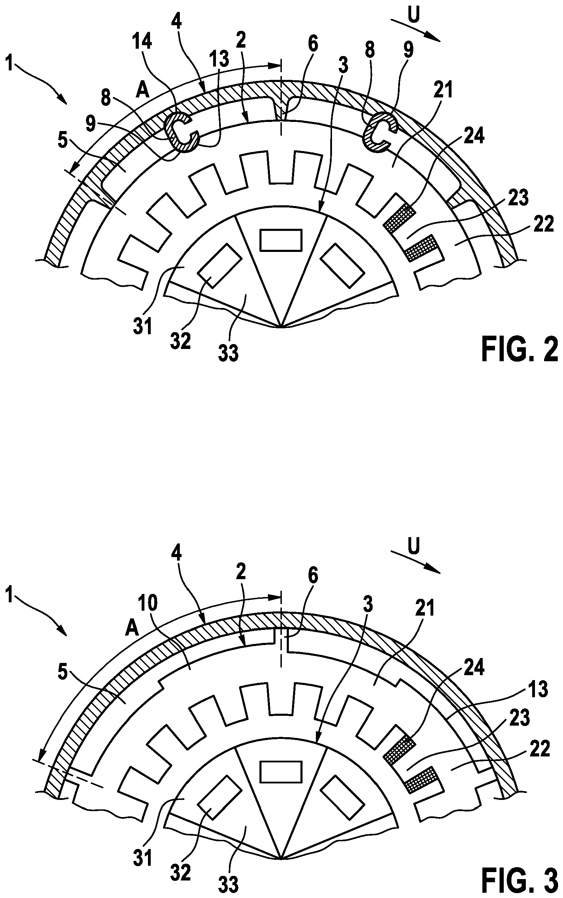

Wie in Figur 2 gezeigt, können zusätzliche Abstützelemente 8 eingesetzt werden, die in einem oder mehreren durch die Abstände zwischen den benachbarten Halteelementen 6 gebildeten Zwischenbereiche angeordnet sind und das Gehäuse 4 und die Statoranordnung 2 gegeneinander abstützen bzw. fixieren. Die Abstützelemente 8 können in einander gegenüberliegenden Einbuchtungen 9 des Gehäuses 4 bzw. der Statoranordnung 2 eingesetzt werden, was zu einer kraftschlüssigen Verbindung in axialer Richtung und einer formschlüssigen Verbindung in Umfangsrichtung führt. An der Anlagefläche der Abstützelemente 8 können zwischen der Statoranordnung 2 und dem jeweiligen Abstützelement 8 ein erstes Isolationselement 13 und/oder zwischen dem Gehäuse 4 und dem jeweiligen Abstützelement 8 ein zweites Isolationselement 14 angeordnet sein, um eine elektrische Isolation zwischen dem Gehäuse 4 und der Statoranordnung 2 zur Verfügung zu stellen. Dies hat den Vorteil, dass auch bei Verwenden der Abstützelemente 8 eine Koppelkapazität zwischen dem Gehäuse 4 und der Statoranordnung 2 reduziert werden kann und dadurch die elektromagnetische Verträglichkeit verbessert wird.

Die Abstützelemente 8 können federnd bzw. elastisch ausgeführt werden, so dass sie zwischen die einander gegenüberliegenden Einbuchtungen 9 verspannt eingesetzt werden können, um Bauteiltoleranzen auszugleichen. Ein möglicher Querschnitt mindestens eines der Abstützelemente 8 kann C-förmig (wie dargestellt) oder S-förmig sein. Die Abstützelemente 8 können sich in axialer Richtung über die gesamte axiale Länge der elektrischen Maschine 1 erstrecken oder kürzer ausgebildet sein und insbesondere lediglich im Bereich der Stirnseiten der Statoranordnung 2 angeordnet sein.

Die Abstützelemente 8 sind vorzugsweise aus einem magnetisch nicht leitfähigen Material hergestellt. Alternativ oder zusätzlich können die Abstützelemente 8 dünnwandig ausgebildet sein, so dass die erzeugte magnetische Kopplung zwischen der Statoranordnung 2 und dem Gehäuse 4 auch aufgrund einer magnetischen Sättigung im Betrieb der elektrischen Maschine 1 gering ist.

Der Zwischenraum 5 zwischen benachbarten Halteelementen 6, der sich zwischen dem Gehäuse 4 und der Statoranordnung 2 ausbildet, kann als Kühlkanal zum Führen eines Kühlmediums verwendet werden. Als Kühlmedium kann Luft, Öl, Wasser oder dergleichen, vorzugsweise jedoch ein nichtleitendes Medium, durch den Kühlkanal in axialer Richtung geleitet werden, so dass durch den direkten Kontakt zum Statorkörper 21 Wärme aus der Statoranordnung 2 abgeführt wird.

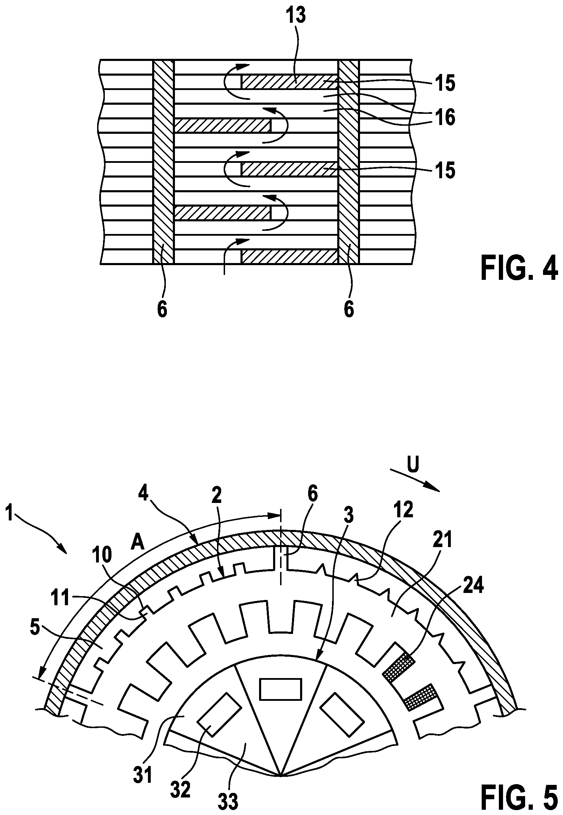

Um die Effizienz einer Kühlung durch Leiten des Kühlmediums durch den Kühlkanal zu steigern, können in dem Kühlkanal zum Vergrößern der Kühlfläche bzw. zum Verursachen von Verwirbelungen des durchströmenden Kühlmediums Kühlelemente 10 vorgesehen werden, die wie in den Figuren 3 und 5 dargestellt an der Außenseite der Statoranordnung 2 und/oder an der Innenseite des Gehäuses 4 angeordnet sind. Insbesondere sind die Kühlelemente 10 idealerweise stoffschlüssig mit der Statoranordnung 2 bzw. dem Gehäuse 4 verbunden oder integriert (einstückig) mit diesen ausgebildet, wobei diese jedoch keine magnetische Brücke zwischen dem Gehäuse 4 und der Statoranordnung 2 herstellen dürfen.

Die Kühlelemente 10 können, wie in Figur 5 dargestellt, beispielsweise als im Wesentlichen in axialer Richtung verlaufende Kühlrippen 11 ausgeführt sein, die einen eckigen, insbesondere dreieckigen, oder kreissegmentförmigen Querschnitt aufweisen können. Weiterhin sind Wirbelerzeuger oder so genannte Pin-Fins 12, die z.B. als Stifte oder Noppen an der Statoranordnung 2 ausgebildet sein können, als Kühlelemente 10 denkbar.

Alternativ kann, wie in der Ausführungsform der Figur 3 dargestellt, die Außenfläche der Statoranordnung 2 mit Kühlflächen 13 als Kühlelemente 10 versehen sein, die sich innerhalb der Abstände zwischen den Halteelementen 6 teilweise in Umfangsrichtung erstrecken und von der Statoranordnung 2 hervorstehen. Diese Kühlflächen 13 können in einfacher Weise bei einem Aufbau der Statoranordnung 2 aus Blechlamellen durch geeignete Blechschnitte gebildet werden.

Zum Aufbau der Statoranordnung 2 wie sie in den Figuren 3 und 4 dargestellt ist, werden lediglich zwei Blechschnitte benötigt. Dabei sind erste Blechlamellen 15 mit über den Außenumfang der gebildeten Statoranordnung 2 hervorstehenden Kühlflächen 13, d.h. mit einer Außenkante mit stufenförmigem Verlauf, und zweite Blechlamellen 16 ohne über den Außenumfang der gebildeten Statoranordnung 2 hervorstehende Kühlflächen 13 ausgebildet. Zum Aufbau der Statoranordnung 2 sind eine oder mehrere der zweiten Blechlamellen 16 zwischen jeweils einer ersten Blechlamelle 15 angeordnet, um die Kühlflächen 13 voneinander zu beabstanden.

Es kann weiterhin vorgesehen sein, dass die ersten Blechlamellen z.B. wechselseitig so angeordnet werden, dass die Kühlflächen 13 bezüglich der axialen Richtung zueinander versetzt angeordnet sind, so dass diese in axialer Richtung zumindest im Bereich der Statoranordnung 2 einen mäanderförmigen Verlauf des Kühlkanals bewirken.

## Patentansprüche

1. Elektrische Maschine (1) umfassend:
- eine insbesondere kreiszylindrische Statoranordnung (2);
- ein Gehäuse (4) aus einem magnetisch leitfähigen Material, das die Statoranordnung (2) umgibt, so dass ein Zwischenraum (5) zwischen dem Gehäuse (4) und der Statoranordnung (2) ausgebildet ist,
- Halteelemente (6), die zwischen der Statoranordnung (2) und dem Gehäuse (4) angeordnet sind,
**dadurch gekennzeichnet, dass**
die Halteelemente (6) aus einem magnetisch leitfähigen Material ausgebildet und in Umfangsrichtung mit einem jeweiligen Abstand zueinander angeordnet sind, der einer vollen elektrische Periode der elektrischen Maschine (1) oder einem Vielfachen davon entspricht, indem der Abstand in Umfangsrichtung einem Winkel, der 360° geteilt durch eine Polpaarzahl einer Rotoranordnung der elektrischen Maschine (1) entspricht, oder einem Vielfachen davon entspricht.

2. Elektrische Maschine (1) nach Anspruch 1, wobei eines oder mehrere der Halteelemente (6), insbesondere alle Halteelemente (6) einstückig mit dem Gehäuse (4) ausgebildet sind.

3. Elektrische Maschine (1) nach Anspruch 2, wobei zwischen mindestens einem der Halteelemente (6), insbesondere allen Halteelementen (6), und der Statoranordnung (2) ein Isolationsstück zur elektrischen Isolierung zwischen dem Gehäuse (4) und der Statoranordnung (2) vorgesehen ist.

4. Elektrische Maschine (1) nach Anspruch 1, wobei eines oder mehrere der Halteelemente (6), insbesondere alle Halteelemente (6), einstückig mit der Statoranordnung (2) ausgebildet sind.

5. Elektrische Maschine nach Anspruch 4, wobei zwischen mindestens einem der Halteelemente (6), insbesondere allen Halteelementen (6), und dem Gehäuse (4) ein Isolationsstück zur elektrischen Isolierung zwischen dem Gehäuse (4) und der Statoranordnung (2) vorgesehen ist.

6. Elektrische Maschine (1) nach einem der Ansprüche 1 bis 5, wobei die Zwischenräume (5) zwischen dem Gehäuse und der Statoranordnung (2) zumindest teilweise mit Kühlmedium gefüllt sind.

7. Elektrische Maschine (1) nach einem der Ansprüche 1 bis 6, wobei in den Zwischenräumen (5) zwischen dem Gehäuse (4) und der Statoranordnung (2) Kühlelemente (10) angeordnet sind, wobei die Kühlelemente (10) als sich in einer axialen Richtung verlaufende Kühlrippen ausgeführt sind, die einen eckigen, insbesondere dreieckigen, oder kreissegmentförmigen Querschnitt aufweisen.

8. Elektrische Maschine (1) nach einem der Ansprüche 1 bis 7, wobei in den Zwischenräumen (5) zwischen dem Gehäuse (4) und der Statoranordnung (2) Kühlelemente (10) angeordnet sind, wobei die Kühlelemente (10) als Pin-Fins ausgeführt sind.

9. Elektrische Maschine (1) nach einem der Ansprüche 1 bis 8, wobei die Statoranordnung (2) mit in Umfangsrichtung in den Zwischenraum (5) hineinragenden Kühlflächen ausgebildet sind, wobei die Kühlflächen voneinander beabstandet sind und bezüglich einer axialen Richtung ineinandergreifend ausgebildet sind.

10. Elektrische Maschine (1) nach einem der Ansprüche 1 bis 9, wobei die Statoranordnung (2) und das Gehäuse (4) aus gleichen Materialien ausgebildet sind.

11. Verwendung einer elektrischen Maschine (1) nach einem der Ansprüche 1 bis 10, wobei durch die Zwischenräume (5) in axialer Richtung ein Kühlmedium geleitet wird.

## Claims

1. Electrical machine (1) comprising:
- an, in particular, circular-cylindrical stator arrangement (2);
- a housing (4) which is composed of a magnetically permeable material which surrounds the stator arrangement (2), so that an intermediate space (5) is formed between the housing (4) and the stator arrangement (2),
- retaining elements (6) which are arranged between the stator arrangement (2) and the housing (4), **characterized in that**
the retaining elements (6) are formed from a magnetically permeable material and are arranged with a respective distance from one another in the circumferential direction, the said distance corresponding to a full electrical period of the electrical machine (1) or a multiple thereof, by the distance in the circumferential direction corresponding to an angle which corresponds to 360° divided by a number of pole pairs of a rotor arrangement of the electrical machine (1), or a multiple thereof.

2. Electrical machine (1) according to Claim 1, wherein one or more of the retaining elements (6), in particular all of the retaining elements (6), are integrally formed with the housing (4).

3. Electrical machine (1) according to Claim 2, wherein an insulation piece for providing electrical insulation between the housing (4) and the stator arrangement (2) is provided between at least one of the retaining elements (6), in particular all of the retaining elements (6), and the stator arrangement (2).

4. Electrical machine (1) according to Claim 1, wherein one or more of the retaining elements (6), in particular all of the retaining elements (6), is/are integrally formed with the stator arrangement (2).

5. Electrical machine (1) according to Claim 4, wherein an insulation piece for providing electrical insulation between the housing (4) and the stator arrangement (2) is provided between at least one of the retaining elements (6), in particular all of the retaining elements (6), and the housing (4).

6. Electrical machine (1) according to one of Claims 1 to 5, wherein the intermediate spaces (5) between the housing and the stator arrangement (2) are at least partially filled with cooling medium.

7. Electrical machine (1) according to one of Claims 1 to 6, wherein cooling elements (10) are arranged in the intermediate spaces (5) between the housing (4) and the stator arrangement (2), wherein the cooling elements (10) are designed as cooling ribs which run in an axial direction and have an angular, in particular triangular, cross section or a cross section in the form of a segment of a circle.

8. Electrical machine (1) according to one of Claims 1 to 7, wherein cooling elements (10) are arranged in the intermediate spaces (5) between the housing (4) and the stator arrangement (2), wherein the cooling elements (10) are designed as pin fins.

9. Electrical machine (1) according to one of Claims 1 to 8, wherein the stator arrangement (2) are formed with cooling areas which project into the intermediate space (5) in the circumferential direction, wherein the cooling areas are at a distance from one another and are formed to engage one in the other with respect to an axial direction.

10. Electrical machine (1) according to one of Claims 1 to 9, wherein the stator arrangement (2) and the housing (4) are formed from identical materials.

11. Use of an electrical machine (1) according to one of Claims 1 to 10, wherein a cooling medium is conducted through the intermediate spaces (5) in the axial direction.

## Revendications

1. Machine électrique (1) comprenant :
- un arrangement de stator (2) notamment cylindrique circulaire,
- un carter (4) constitué d'un matériau magnétiquement conducteur qui entoure l'arrangement de stator (2), de manière à former un espace intermédiaire (5) entre le carter (4) et l'arrangement de stator (2),
- des éléments de maintien (6) qui sont disposés entre l'arrangement de stator (2) et le carter (4), **caractérisée en ce que**
les éléments de maintien (6) sont composés d'un matériau magnétiquement conducteur et sont disposés dans le sens périphérique avec un écart respectif les uns des autres qui correspond à une période complète de la machine électrique (1) ou à un multiple ce celle-ci, **en ce que** l'écart dans le sens périphérique correspond à un angle des 360° divisés par un nombre de paires de pôles d'un arrangement de rotor de la machine électrique (1), ou à un multiple de celui-ci.

2. Machine électrique (1) selon la revendication 1, un ou plusieurs des éléments de maintien (6), notamment tous les éléments de maintien (6), étant réalisés d'un seul tenant avec le carter (4).

3. Machine électrique (1) selon la revendication 2, une pièce isolante servant à l'isolation électrique entre le carter (4) et l'arrangement de stator (2) se trouvant entre au moins l'un des éléments de maintien (6), notamment tous les éléments de maintien (6), et l'arrangement de stator (2).

4. Machine électrique (1) selon la revendication 1, un ou plusieurs des éléments de maintien (6), notamment tous les éléments de maintien (6), étant réalisés d'un seul tenant avec l'arrangement de stator (2).

5. Machine électrique selon la revendication 4, une pièce isolante servant à l'isolation électrique entre le carter (4) et l'arrangement de stator (2) se trouvant entre au moins l'un des éléments de maintien (6), notamment tous les éléments de maintien (6), et le carter (4).

6. Machine électrique (1) selon l'une des revendications 1 à 5, les espaces intermédiaires (5) entre le carter et l'arrangement de stator (2) étant au moins partiellement remplis avec un fluide de refroidissement.

7. Machine électrique (1) selon l'une des revendications 1 à 6, des éléments de refroidissement (10) étant disposés dans les espaces intermédiaires (5) entre le carter (4) et l'arrangement de stator (2), les éléments de refroidissement (10) étant réalisés sous la forme d'ailettes de refroidissement qui s'étendent dans une direction axiale, lesquelles possèdent une portion transversale angulaire, notamment triangulaire, ou en forme de segments de cercle.

8. Machine électrique (1) selon l'une des revendications 1 à 7, des éléments de refroidissement (10) étant disposés dans les espaces intermédiaires entre le carter (4) et l'arrangement de stator (2), les éléments de refroidissement (10) étant réalisés sous la forme d'ailettes en épingle.

9. Machine électrique (1) selon l'une des revendications 1 à 8, l'arrangement de stator (2) étant réalisés avec des surfaces de refroidissement qui font saillie dans le sens périphérique à l'intérieur de l'espace intermédiaire (5), les surfaces de refroidissement étant espacées les unes des autres et configurées pour s'imbriquer les unes dans les autres par rapport à une direction axiale.

10. Machine électrique (1) selon l'une des revendications 1 à 9, l'arrangement de stator (2) et le carter (4) étant constitués des mêmes matériaux.

11. Utilisation d'une machine électrique (1) selon l'une des revendications 1 à 10, un fluide de refroidissement circulant dans le sens axial à travers les espaces intermédiaires (5).
